# EUROPEAN PATENT SPECIFICATION

(11) **EP 2 450 504 B1**
(45) Date of publication and mention of the grant of the patent: **08.03.2017**
(21) Application number: 11188185.0
(22) Date of filing: 08.11.2011
(51) Int. Cl.: E04H 4/12, F16L 41/00

(54) **Port for swimming pools**
Anschluss für Schwimmbecken
Port pour piscines

(30) Priority: 09.11.2010 FR 1059220
(43) Date of publication of application: 09.05.2012
(73) Proprietor: SACOPA, S.A.U., 17854 Sant Jaume de Llierca (Girona) (ES)
(72) Inventor: Luque Culubret, Marc, 17165 La Cellera De Ter (Girona) (ES); Collelldevall Planella, Jordi, 17480 Olot (ES)
(74) Representative: Carpintero Lopez, Francisco

(56) References cited:
- WO-A2-2004/092630
- DE-A1- 2 607 052
- US-A- 3 945 061

## Description

The port is mainly intended for elevated swimming pools, or above-ground swimming pools, and can be used as a return in the filtration system of such swimming pools.

The ports used until now form a straight tubular assembly and have a complex structure based on several parts that can be coupled to each other by threading and are installed according to an arrangement perpendicular to the wall of the swimming pool.

In addition to the complexity of the port constitution, its setting perpendicular to the wall of the swimming pool can encourage people, and particularly children, to use it as a step to climb up to the edge of the swimming pool with the danger it entails specially for small children.

DE 26 07 052 A1 discloses a port made in accordance with the preamble of claim 1.

The object of the invention is to propose a high security port allowing to prevent said risk while having a simple structure.

The object of the invention is achieved with a port for swimming pools, intended to be coupled to the wall of the swimming pool and comprising a tubular monobloc angular body which determines an oblique stretch with respect to the wall of the swimming pool and having on the other, substantially horizontal stretch, a protection part having a taper constituting an inclined surface prolonging that of the oblique stretch of the angular body.

The port of the invention is therefore essentially made up of two parts, the port itself which is made up of a monobloc angular body, and a protection part that can be coupled to this angular body, forming an assembly that is coupled to the wall of the swimming pool and having a downward obliqueness allowing to prevent its use as a step, since the foot slides on this inclined surface.

The protection part has a taper and a curved cross-section to adapt to the upper (horizontal) portion of the angular body as a result of which the port couples to the wall of the swimming pool and is fixed on the angular body by means of a locking element coupled to said angular body and passing through a lateral opening of the protection part.

These and other features will be better understood from the following detailed description, together with a sheet of drawings depicting an embodiment described as a non-limiting example of the scope of the present invention.

In the drawings:
Figure 1 illustrates a longitudinal section of a classic port,
Figures 2 and 3 show, in side elevation and cross-section elevation respectively, the port assembly object of the invention,
Figure 4 depicts a perspective view of that port coupled to the wall of an elevated swimming pool, and
Figure 5 is a variant of the port having a thread for fixing a hose.

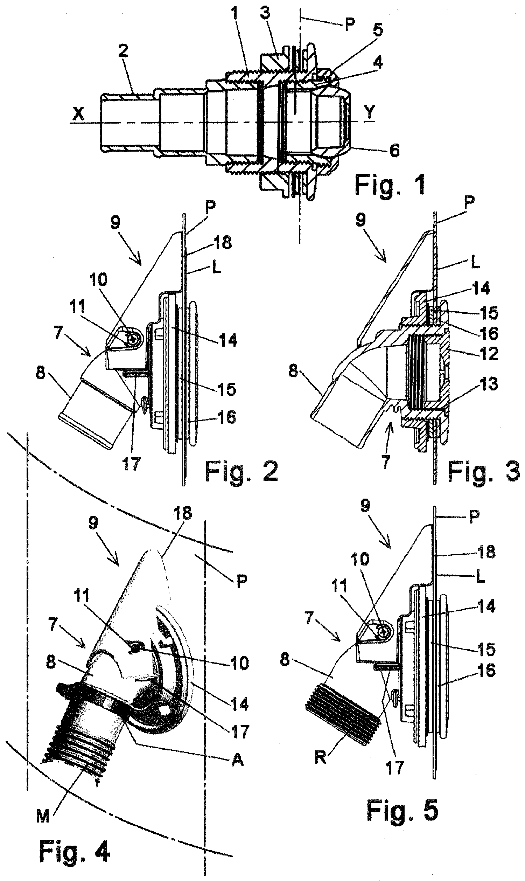

According to the drawings, Figure 1 illustrates a classic port made up of six parts aligned on a straight longitudinal axis X-Y, i.e., a main body 1 threaded on the outside and on the inside, a port 2 itself, a nut 3 for fixing to a wall P of the swimming pool, an inner clamp 4, a nut 5 and a swiveling clamp 6. This assembly is fixed perpendicularly to the wall P of the swimming pool.

Figures 2 and 3 depict a port object of the invention comprising essentially two parts, i.e., a monobloc angular and tubular body 7 which determines an oblique stretch 8 with respect to the wall P of the swimming pool and having on the other substantially horizontal stretch a protection part 9 having a taper constituting an inclined surface prolonging that of the oblique stretch 8 of the angular body 7.

The protection part 9 has a curved cross-section and is fixed to the angular body 7 by means of a locking element 10 coupled to the angular body 7 and passing through a lateral opening 11 of the protection part 9, said locking element 10 comprising a screw attached in an internally threaded projection (not shown in the drawings) provided on the angular body 7.

The port of the invention is completed by a lock nut 12 (Figure 3) attached in a threaded mouth 13 of the tubular body 7 facing the wall P of the swimming pool, this wall being made up of panels coated on their inner face with laminated plastic (also called "liner") L.

A mark 14 indicates the nut with which the port will be fixed to the wall P of the swimming pool, flat joining tracks 15, 16 being able to comprise the juxtaposition of friction rings being disposed on both faces of the wall P.

The protection part 9 rests on lateral flanges 17 of the angular body 7 and is applied by the back edges 18 against the wall P of the swimming pool.

A sleeve or hose M (Figure 4) will be coupled on the oblique stretch 8 of the angular body 7 by means of a tightening collar A.

According to an embodiment variant depicted in Figure 5, the oblique stretch 8 is provided with a thread R on which a hose can be fixed by means of a threaded nozzle.

The invention can be globally put into practice in other embodiments differing only in detail from the one described hereinabove as a non-limiting example, and to which the protection sought will also be applied. The port for swimming pools can therefore be manufactured in any shape and size, with the most suitable means and materials and with the most appropriate accessories, the constituting elements being able to be substituted by other technically equivalent elements, all of which is comprised within the scope of the claims.

## Claims

1. Port for swimming pools intended to be coupled to a wall (P) of the swimming pool, comprising a monobloc angular tubular body (7) which determines an oblique stretch (8) with respect to the wall (P) of the swimming pool, **characterised in that** the monobloc angular tubular body (7) has on the other substantially horizontal stretch a protection part (9) having a taper constituting an inclined surface prolonging that of the oblique stretch (8) of the angular body (7).

2. Port for swimming pools according to claim 1, **characterized in that** the protection part (9) has a curved cross-section.

3. Port for swimming pools according to claim 1, **characterized in that** the protection part (9) is fixed to the angular body (7) by means of a locking element (10) coupled to the angular body (7) and passing through a lateral opening (11) of the protection part (9).

4. Port for swimming pools according to claim 3, **characterized in that** the locking element (10) comprises a screw attached in an internally threaded projection provided on the angular body (7).

5. Port for swimming pools according to claim 1, **characterized in that** the angular body (7) has, attached in a threaded mouth (13), facing the wall (P) of the swimming pool, a lock nut (12).

## Patentansprüche

1. Anschluss für Schwimmbecken, der dazu ausgelegt ist, an eine Wand (P) des Schwimmbeckens gekuppelt zu sein, umfassend einen winkligen, rohrförmigen Monoblockkörper (7), der eine schräge Strecke (8) bezüglich der Wand (P) des Schwimmbeckens bestimmt, **dadurch gekennzeichnet, dass** der winklige, rohrförmige Monoblockkörper (7) an der anderen, im Wesentlichen horizontalen Strecke ein Schutzteil (9) mit einer Verjüngung aufweist, die eine geneigte Oberfläche bildet, welche jene der schrägen Strecke (8) des winkligen Körpers (7) verlängert.

2. Anschluss für Schwimmbecken nach Anspruch 1, **dadurch gekennzeichnet, dass** das Schutzteil (9) einen gekrümmten Querschnitt aufweist.

3. Anschluss für Schwimmbecken nach Anspruch 1, **dadurch gekennzeichnet, dass** das Schutzteil (9) mithilfe eines Sperrelements (10) am winkligen Körper (7) befestigt ist, das an den winkligen Körper (7) gekuppelt ist und eine seitliche Öffnung (11) des Schutzteils (9) durchläuft.

4. Anschluss für Schwimmbecken nach Anspruch 3, **dadurch gekennzeichnet, dass** das Sperrelement (10) eine Schraube umfasst, die in einem Vorsprung mit Innengewinde angebracht ist, der am winkligen Körper (7) vorgesehen ist.

5. Anschluss für Schwimmbecken nach Anspruch 1, **dadurch gekennzeichnet, dass** der winklige Körper (7) eine Sperrmutter (12) aufweist, die in einer Gewindemündung (13), welche der Wand (P) des Schwimmbeckens zugekehrt ist, angebracht ist.

## Revendications

1. Orifice pour piscines destiné à être couplé à une paroi (P) de la piscine, comportant un corps tubulaire angulaire monobloc (7) qui détermine une extension oblique (8) par rapport à la paroi (P) de la piscine, **caractérisé en ce que** le corps tubulaire angulaire monobloc (7) a, sur l'autre extension sensiblement horizontale, une pièce de protection (9) ayant un défilement formant une surface inclinée prolongeant celle de l'extension oblique (8) du corps angulaire (7).

2. Orifice pour piscines selon la revendication 1, **caractérisé en ce que** la pièce de protection (9) a une section transversale courbe.

3. Orifice pour piscines selon la revendication 1, **caractérisé en ce que** la pièce de protection (9) est fixée au corps angulaire (7) au moyen d'un élément de blocage (10) couplé au corps angulaire (7) et passant à travers une ouverture latérale (11) de la pièce de protection (9).

4. Orifice pour piscines selon la revendication 3, **caractérisé en ce que** l'élément de blocage (10) comporte une vis fixée dans une saillie filetée intérieurement et agencée sur le corps angulaire (7).

5. Orifice pour piscines selon la revendication 1, **caractérisé en ce que** le corps angulaire (7) a, fixé dans une embouchure filetée (13), dirigée vers la paroi (P) de la piscine, un écrou de blocage (12).
